# EUROPÄISCHE PATENTSCHRIFT

(11) **EP 3 483 074 B1**
(45) Veröffentlichungstag und Bekanntmachung des Hinweises auf die Patenterteilung: **31.07.2024**
(21) Anmeldenummer: 18205255.5
(22) Anmeldetag: 08.11.2018
(51) Int. Cl.: B64G 1/00, B64G 1/44

(54) **TRÄGERRAKETE MIT SOLARZELLEN, HERSTELLUNGSVERFAHREN UND TRANSPORTVERFAHREN**
LAUNCH VEHICLE COMPRISING SOLAR CELLS, METHOD OF MANUFACTURING AND TRANSPORTATION METHOD
VÉHICULE LANCEUR À CELLULES SOLAIRES, PROCÉDÉ DE FABRICATION ET PROCÉDÉ DE TRANSPORT

(30) Priorität: 13.11.2017 DE 102017126609
(43) Veröffentlichungstag der Anmeldung: 15.05.2019
(73) Patentinhaber: ArianeGroup GmbH, 82024 Taufkirchen (DE)
(72) Erfinder: Vorel, Michal, 28199 Brmen (DE)
(74) Vertreter: Marschall, Stefan

(56) Entgegenhaltungen:
- EP-A1- 0 665 162
- WO-A1-2005/118394
- WO-A2-2016/014869
- DE-A1- 10 351 713
- US-A1- 2008 237 399
- US-B1- 6 484 973
- US-B1- 7 108 228
- ANONYMOUS: "Crew Dragon - Satellite Missions - eoPortal Directory", 29 May 2014 (2014-05-29), XP055566117, Retrieved from the Internet <URL:https://directory.eoportal.org/web/eoportal/satellite-missions/content/-/article/crew-dragon> [retrieved on 20190307]
- SPACEX: "SpaceX Dragon V2 | Flight Animation", 29 May 2014 (2014-05-29), pages 1 - 2, XP054979196, Retrieved from the Internet <URL:https://www.youtube.com/watch?v=Cf_-g3UWQ04> [retrieved on 20190308]

## Beschreibung

Die vorliegende Erfindung betrifft eine Trägerrakete zum Transport mindestens einer Last in eine Erdumlaufbahn und ein Verfahren zum Transportieren einer Last in eine Erdumlaufbahn.

Trägerraketen werden in der Raumfahrt dazu verwendet, Lasten wie insbesondere Bauteile oder Versorgungsmaterial für eine Raumstation oder auch Satelliten von der Erdoberfläche in eine vorgesehene Umlaufbahn zu transportieren. Die jeweilige Last ist dabei in der Regel hinter einer Nutzlastverkleidung der Trägerrakete angeordnet und dadurch vor schädigenden Einflüssen während des Starts und/oder Flugs geschützt.

Die Trägerrakete kann insbesondere als Mehrstufenrakete ausgebildet sein, die während des Flugs sogenannte "untere Stufen" mit leeren Treibstofftanks oder nicht mehr benötigten Triebwerken abwerfen kann, so dass lediglich eine relativ leichte, sogenannte "Oberstufe" der Rakete zur vorgesehenen Umlaufbahn fliegen muss. Aufgrund der Massenreduktion kann auf diese Weise eine höhere Umlaufbahn erreicht werden. Insbesondere kann die Nutzlastverkleidung nach Austritt der Rakete aus der Atmosphäre abzuwerfen sein.

Die Trägerrakete oder auch eine transportierte Last enthält in der Regel elektrische bzw. elektronische Komponenten, die während des Transportflugs mit elektrischer Energie versorgt werden müssen. Dazu sind gewöhnlich Batterien in der Trägerrakete vorgesehen. DE10351713 A1 offenbart eine Energieversorgung nach dem Stand der Technik.

Die vorliegende Erfindung hat die Aufgabe, eine verbesserte Technik bereitzustellen, mit der eine Energieversorgung elektrischer und/oder elektronischer Komponenten während eines Transportflugs einer Trägerrakete realisiert werden kann.

Die Aufgabe wird gelöst durch eine Trägerrakete gemäß Anspruch 1 und ein Transportverfahren gemäß Anspruch 5 zum Transportieren einer Last in eine Erdumlaufbahn. Vorteilhafte Ausführungsformen sind in den Unteransprüchen, der Beschreibung und den Figuren offenbart.

Eine erfindungsgemäße Trägerrakete dient einem Transport mindestens einer Last (die beispielsweise Versorgungsmaterial oder ein Bauteil für eine Raumstation sein kann oder ein Satellit) in eine Erdumlaufbahn. An ihrer äußeren Oberfläche weist die Trägerrakete eine Mehrzahl an Solarzellen auf.

Die Mehrzahl an Solarzellen ist in mindestens ein Photovoltaikmodul (die auch als "Solarmodul" oder englisch als "Solarpanels" bezeichnet werden) integriert; ein derartiges Photovoltaikmodul kann mehrere Solarfelder umfassen, in die jeweils mehrere der Solarzellen zusammengefasst sein können. Insbesondere können mehrere der Solarzellen (und/oder ggf. mehrere der Solarfelder) in Reihe geschaltet sein, und/oder mehrere der Solarzellen (bzw. Solarfelder) können parallel geschaltet sein.

Erfindungsgemäß ist das mindestens eine Photovoltaikmodul in eine Vertiefung in einer Isolierung eingefasst (beispielsweise eingeklebt). Auf diese Weise kann eine besonders solide Befestigung bewirkt werden, zudem können Unebenheiten in der äußeren Oberfläche und damit Luftwiderstände minimiert werden.

Die äußere Oberfläche, an der die Solarzellen angeordnet sind bzw. werden, ist dann also mindestens teilweise eine Oberfläche der Isolierung, die als Isolationsschicht ausgebildet sein kann. Die Isolierung kann beispielsweise ganz oder teilweise aus Polyurethan (insbesondere Polyurethanschaum) und/oder einem Korkmaterial bestehen.

Die Isolierung der Trägerrakete kann insbesondere eine Isolierung mindestens eines Treibstofftanks und/oder mindestens einer Übergangsstruktur (die beispielsweise zwischen zwei oder mehr Tanks und/oder Stufen ausgebildet sein kann) der Trägerrakete sein.

Das mindestens eine Photovoltaikmodul umfasst eine Mehrzahl an Anschlussleitungen, die in einen Kabelbaum gebündelt sind. Ein derartiger Kabelbaum kann mittels eines entsprechenden Anschlusses mit mindestens einer elektrischen und/oder elektronischen Komponente (insbesondere mit einem Akkumulator) der Trägerrakete und/oder einer transportierten Last dauerhaft oder lösbar verbunden sein bzw. werden.

Gemäß einer vorteilhaften Ausführungsform der vorliegenden Erfindung umfasst die Mehrzahl mindestens eine Solarzelle, die lösbar an eine elektrische und/oder eine elektronische Komponente (beispielsweise einen Akkumulator) der transportierten Last angeschlossen oder anzuschließen ist. Alternativ oder zusätzlich kann die Mehrzahl mindestens eine Solarzelle umfassen, die dauerhaft oder lösbar an mindestens einen Akkumulator angeschlossen oder anzuschließen ist, der seinerseits lösbar mit einer elektrischen und/oder eine elektronischen Komponente der transportierten Last verbunden ist (und der zur Trägerrakete gehörig sein und außerhalb der Last liegen kann). So wird jeweils eine Energieversorgung der elektrischen und/oder eine elektronischen Komponente/n der Last durch die Solarzellen ermöglicht. Insbesondere kann die Last (bzw. deren elektrische und/oder elektronische Komponente/n) damit während der gesamten ballistischen Phase durch die Solarzellen mit Energie versorgt werden.

Ein Herstellungsverfahren dient der Herstellung einer Trägerrakete, beispielsweise einer erfindungsgemäßen Trägerrakete gemäß einer der in dieser Schrift offenbarten Ausführungsformen. Das Herstellungsverfahren umfasst ein Befestigen einer Mehrzahl an Solarzellen an einer äußeren Oberfläche der Trägerrakete.

Ein erfindungsgemäßes Transportverfahren umfasst ein Transportieren einer Last mittels einer erfindungsgemäßen Trägerrakete (gemäß einer der in dieser Schrift offenbarten Ausführungsformen) von der Erdoberfläche in eine Erdumlaufbahn.

Die erfindungsgemäß an der äußeren Oberfläche der Trägerrakete angeordneten Solarzellen ermöglichen eine Aufnahme von Energie in Form von Sonnenlicht und deren Umwandlung in elektrische Energie während des Transportfluges der Trägerrakete. Eine Anzahl an in der Trägerrakete mitzuführenden und für gewöhnlich schweren Batterien kann dadurch vermindert werden, was eine vorteilhafte Massenreduktion bedeutet.

Die Solarzellen sind bzw. werden vorzugsweise an eine elektrische und/oder elektronische Komponente, insbesondere an mindestens einen Energiespeicher (Akkumulator) der Trägerrakete oder einer mitgeführten Last angeschlossen.

Ist die Last beispielsweise ein Satellit, der unter Aufwendung elektrischer Energie aufgefaltet und/oder in seine Umlaufbahn geschossen wird, kann die dafür notwendige Energie mindestens teilweise während des Transportfluges durch die Solarzellen gewonnen und in mindestens einem Akkumulator gespeichert werden. Analog kann die für ein Andocken an einer Weltraumstation und/oder für ein Abladen der Last erforderliche Energie und/oder für das Aufrechterhalten eines Bereitschaftsbetriebs mindestens eines mitgeführten Geräts ganz oder teilweise während des Transportfluges durch die Solarzellen gewonnen und/oder in mindestens einem Akkumulator gespeichert werden.

Gemäß einem speziellen Ausführungsbeispiel eines erfindungsgemäßen Transportverfahrens ist eine transportierte Last ein Satellit und umfasst das Transportverfahren ein Aufladen mindestens eines Akkumulators mittels der Mehrzahl an Solarzellen an der Trägerrakete während des Transports sowie ein Abschießen des Satelliten in die vorgesehene Erdumlaufbahn (insbesondere) mittels elektrischer Energie aus dem Akkumulator.

Gemäß einer alternativen Variante eines erfindungsgemäßen Transportverfahrens ist eine transportierte Last ein Bauteil oder ein Frachtgut, das zu einer Weltraumstation gebracht wird, und umfasst das Transportverfahren ein Aufladen mindestens eines Akkumulators mittels der Mehrzahl an Solarzellen an der Trägerrakete während des Transports sowie ein Andocken und/oder Abladen des Bauteils bzw. Frachtguts an der Weltraumstation (insbesondere) mittels elektrischer Energie aus dem Akkumulator.

Vorteilhaft ist eine Ausführungsform der vorliegenden Erfindung, bei der die Trägerrakete als eine Mehrstufenrakete ausgebildet ist und bei der die Mehrzahl an Solarzellen an einer Oberstufe (bezogen auf eine Reihenfolge der Zündung beispielsweise an einer zweiten oder höheren Stufe der Mehrstufenrakete) angeordnet ist bzw. wird. Diese Oberstufe enthält vorzugsweise die zu transportierende Last und fliegt die meiste Zeit des Flugs unter direkter Sonneneinstrahlung.

Vorteilhaft sind Ausführungsvarianten eines Herstellungsverfahrens, bei denen eine oder mehrere der Solarzellen bei der Herstellung der Oberstufe an deren Oberfläche befestigt wird/werden, und/oder bei denen eine oder mehrere der Solarzellen in einem Montageprozess, in dem zwei oder mehr Stufen der Mehrstufenrakete zusammengesetzt werden, an der Oberfläche der Oberstufe befestigt wird/werden.

Indem die Solarzellen auftreffende Sonnenergie absorbieren und nicht oder nur teilweise in das dahinter liegende Material weiterleiten, verhindern oder vermindern sie bei diesen Ausführungsvarianten ein unerwünschtes Aufwärmen insbesondere des Treibstoffs im Tank, wirken also als (weitere) Isolierung für den Treibstoff der Trägerrakete. Insbesondere bei kryogenen Treibstoffen ist diese isolierende Funktion besonders vorteilhaft.

Die äußere Oberfläche, an der die Mehrzahl an Solarzellen angeordnet ist bzw. wird, liegt vorzugsweise in einem im Wesentlichen kreiszylindrisch geformten Abschnitt der Trägerrakete. Insbesondere können die Solarzellen dabei kranzartig um die Trägerrakete herum angeordnet sein. Gemäß einem speziellen Ausführungsbeispiel, bei dem wie erwähnt die Solarzellen in mehrere Photovoltaikmodule integriert sind, können die Photovoltaikmodule (z.B. mindestens teilweise in regelmäßigen Abständen) um die Trägerrakete herum angeordnet sein. Auf diese Weise kann eine Sonneneinstrahlung von verschiedenen Seiten zur Gewinnung elektrischer Energie genutzt werden.

Die Mehrzahl an Solarzellen kann zusammen eine Einstrahlungsfläche für Sonnenlicht (d.h. eine nutzbare Oberfläche, die also dazu eingerichtet ist, Sonnenlicht zur Energieumwandlung zu absorbieren) von mindestens 10m², bevorzugter mindestens 20m² oder sogar mindestens 50m² umfassen. Auf diese Weise kann ein entsprechend hoher Wirkungsgrad erzielt werden.

Eine oder mehrere der Solarzellen können als Halbleitermaterial insbesondere mono- oder polykristallines Silizium enthalten.

Gemäß einer vorteilhaften Ausführungsform ist eine oder sind mehrere der Solarzellen (bzw. - bei entsprechenden Ausführungsformen - ist ein oder sind mehrere der Photovoltaikmodul/e) als biegsame Solarfolie ausgebildet. Derartige Solarfolien sind besonders einfach zu handhaben und an der äußeren Oberfläche der Trägerrakete zu befestigen.

Eine oder mehrere der Solarzellen (bzw. das/die Photovoltaikmodul/e) kann/können als Dünnschichtmodul/e ausgebildet sein, das bzw. die ein Halbleitermaterial mit einer Schichtdicke von höchstens 2µm oder höchstens 1,5µm umfassen kann/können. Das Halbleitermaterial kann insbesondere auf eine Kunststofffolie aufgebracht, beispielsweise aufgedampft sein bzw. werden: Dies ermöglicht eine einfache Verarbeitung sowie eine vorteilhaft geringe Masse (pro Einstrahlungsfläche).

Als Halbleitermaterial kann ein derartiges Dünnschichtmodul insbesondere eine oder mehrere Schicht/en aus amorphem und/oder mikrokristallinem Silizium, aus Kupfer-Indium-Gallium-Diselenid (sogenannte "CIS- oder CIGS-Dünnschichtmodule) oder aus Cadmium-Tellurid (CdTe) enthalten.

Alternativ oder zusätzlich kann/können eine oder mehrere der Solarzellen organisch, also auf Kohlenstoffbasis hergestellt sein, beispielsweise als organische Solarfolie.

Ein erfindungsgemäßes Transportverfahren kann insbesondere ein Anschließen mindestens einer elektrischen und/oder mindestens einer elektronischen Komponente der transportierten Last an die Solarzellen und/oder an mindestens einen mit den Solarzellen verbundenen Akkumulator umfassen sowie ein Versorgen mindestens der Komponente/n der Last während des Transports mit durch Sonneneinstrahlung auf die Mehrzahl an Solarzellen gewonnener Energie. Das Anschließen erfolgt vorzugsweise vor einem Start der Trägerrakete. Gemäß einer vorteilhaften Ausführungsform umfasst ein erfindungsgemäßes Transportverfahren weiterhin ein Ablösen der jeweilige(n) Komponente(n) der Last von den Solarzellen bzw. von dem mindestens einen mit den Solarzellen verbundenen Akkumulator und danach ein Abladen der Last von der Trägerrakete.

Im Folgenden wird ein bevorzugtes Ausführungsbeispiel der Erfindung anhand zweier Zeichnungen näher erläutert. Es versteht sich, dass einzelne Elemente und Komponenten auch anders kombiniert werden können als dargestellt. Bezugszeichen für einander entsprechende Elemente sind figurenübergreifend verwendet und werden ggf. nicht für jede Figur neu beschrieben.

Es zeigen schematisch:
- Figur 1:: eine Trägerrakete gemäß einer exemplarischen Ausführungsform der vorliegenden Erfindung; und
- Figur 2:: eine Detailansicht eines möglichen Schichtaufbaus eines Abschnitts der Trägerrakete gemäß Figur 1 mit einer ersten Leitungsführung; und
- Figur 3:: eine Detailansicht eines Abschnitts einer Trägerrakete mit einer zweiten möglichen Leitungsführung die nicht Teil des beanspruchten Gegenstands ist.

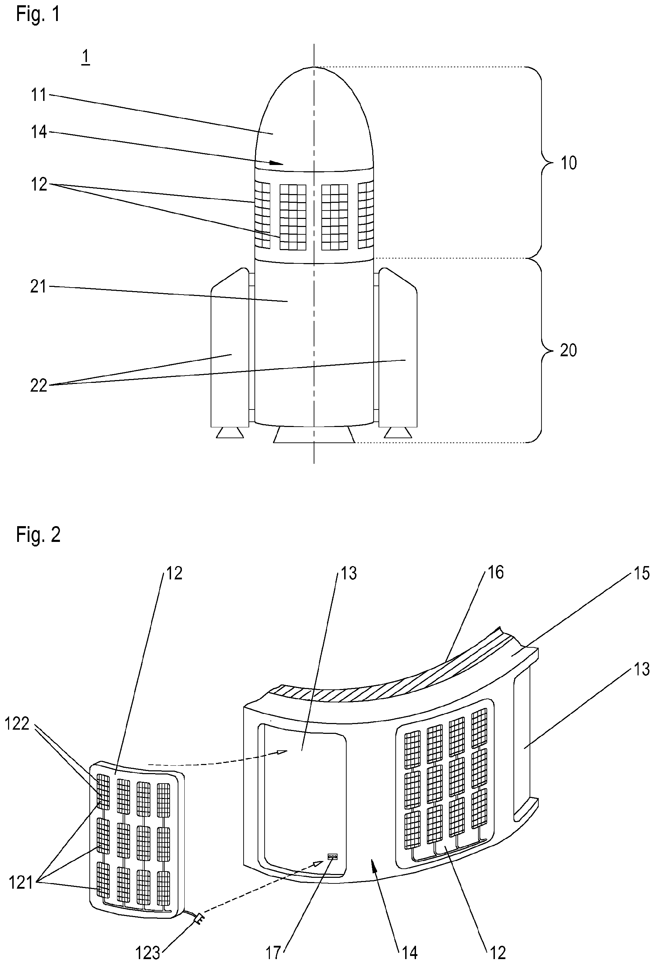

In Figur 1 ist eine erfindungsgemäße Trägerrakete 1 gemäß einer exemplarischen Ausführungsform vereinfacht dargestellt. Die Trägerrakete 1 ist als Mehrstufenrakete mit einer Oberstufe 10 und einer lösbaren Antriebsstufe 20 ausgebildet, die ein Triebwerk 21 und davon wiederum lösbare Hilfsraketen (sogenannte "Booster") 22 umfasst. Im Inneren der Oberstufe 10 kann hinter einer Nutzlastverkleidung 11 eine (in der Figur nicht sichtbare) Last wie beispielsweise ein oder mehrere Satellit(en), ein oder mehrere Bauteil(e) für eine Raumstation und/oder Versorgungsmaterial für eine Raumstation von der Erdoberfläche in eine vorgesehene Erdumlaufbahn transportiert werden.

In einem kreiszylindrisch geformten Abschnitt der Oberstufe 10 sind kranzartig um die Trägerrakete 1 herum mehrere Photovoltaikmodule 12 angeordnet.

In Figur 2 ist eine Detailansicht einer erfindungsgemäßen Anordnung der Photovoltaikmodule 12 einer Ausführungsvariante der vorliegenden Erfindung dargestellt: Die Photovoltaikmodule 12 umfassen jeweils eine Mehrzahl an teils in Reihe, teils parallel geschalteten Solarfeldern 121, die ihrerseits jeweils eine Mehrzahl an Solarzellen 122 umfassen. Die Photovoltaikmodule 12 sind bzw. werden in zugehörige Vertiefungen 13 in der Oberfläche 14 der Trägerrakete eingesetzt, beispielsweise eingeklebt. Die Vertiefungen 13 sind dabei in eine als Schicht ausgebildete Isolierung 15 an einem Treibstofftank oder an einer Übergangsstruktur 16 eingelassen, von dem in der Figur 2 ein Teil der äußeren Wand sichtbar ist. Die Isolierung 15 verhindert oder vermindert zumindest ein unerwünschtes Aufwärmen des Treibstoffs im Treibstofftank. Die Solarzellen 122, die dazu eingerichtet sind, Sonneneinstrahlung zu absorbieren und in elektrische Energie umzuwandeln, wirken ebenfalls als thermische Isolierung.

Die Solarzellen 122 der einzelnen Photovoltaikmodule 12 weisen jeweils einen gemeinsamen Kabelbaum 123 auf, der dazu eingerichtet ist, mit einem Anschluss 17 in der jeweiligen Vertiefung 13 verbunden zu werden. So kann der von den Solarzellen erzeugte elektrische Strom durch die Isolierung 15 hindurch mittels eines Verbindungskabels einer entsprechenden elektrischen und/oder elektronischen Komponente (insbesondere einem Akkumulator) hinter der Außenwand der Trägerrakete 1 (bzw. der Oberstufe 10) zugeführt werden, so dass beispielsweise eine transportierte Last (bzw. eine elektrische und/oder eine elektronische Komponente der Last) mit der Energie versorgt werden kann. In der in Figur 2 gezeigten Ausführungsform verläuft das Verbindungskabel hinter der äußeren Oberfläche der Trägerrakete und ist daher in der Figur nicht sichtbar.

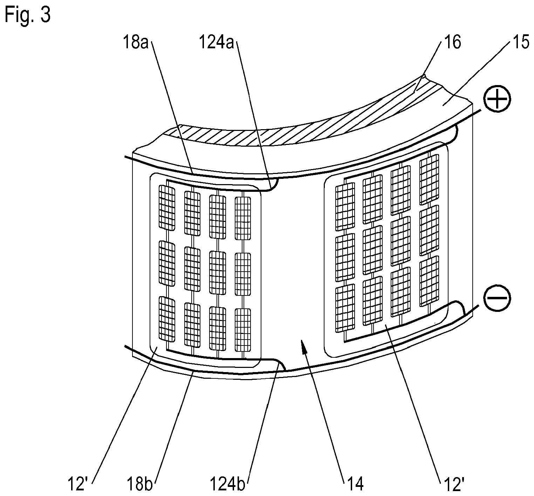

Figur 3 zeigt einen möglichen Abschnitt einer Trägerrakete mit alternativer Leitungsführung die nicht Teil des beanspruchten Gegenstands ist: Die Photovoltaikmodule 12' können dabei wiederum in zugehörige Vertiefungen eingesetzt sein, oder sie können - beispielsweise als Solarfolie, insbesondere mit Dünnschichtmodul ausgebildet - auf einen glatten Bereich der Oberfläche der Trägerrakete aufgebracht (beispielsweise aufgeklebt) sein (nicht sichtbar).

Die Photovoltaikmodule 12' weisen jeweils zwei Anschlussleitungen 124a, 124b auf, mit denen sie (und damit die Mehrzahl an Solarzellen 122) an eine jeweils zugehörige Verbindungsleitung 18a bzw. 18b angeschlossen sind. Die Verbindungsleitungen 18a, 18b verlaufen dabei zumindest in einem Abschnitt an der Außenseite der Trägerrakete, insbesondere an einer Außenfläche der Isolierung 15, auf die sie beispielsweise aufgeklebt sein können. Die in der Figur 3 lediglich teilweise gezeigten Abschnitte umlaufen dabei ringartig die Trägerrakete, und die Photovoltaikmodule 12' sind jeweils zwischen den beiden Verbindungsleitungen 18a und 18b angeordnet, die entsprechend voneinander beabstandet sind.

Wie exemplarisch durch die Symbole "+" und "-" angedeutet, sind die Verbindungsleitungen 18a, 18b jeweils mit einem Pol mindestens einer elektrischen und/oder elektronischen Komponente (beispielsweise mit einem Akkumulator) verbunden oder zu verbinden; die Komponente kann dabei beispielsweise ein von der Last zu trennender Akkumulator sein und/oder Teil einer von der Trägerrakete transportierten bzw. zu transportierenden Last.

Die in der Figur 3 gezeigte Ausführungsform ist besonders einfach herzustellen, insbesondere im Falle von auf einer glatten Oberflächenbereich aufgebrachten Photovoltaikmodulen 12' wie oben genannt, und aufgrund der Sichtbarkeit der Leitungsabschnitte können Fehlanschlüsse besonders gut erkannt und korrigiert werden.

Offenbart ist eine Trägerrakete 1 zum Transport mindestens einer Last in eine Erdumlaufbahn, wobei die Trägerrakete an ihrer äußeren Oberfläche 14 eine Mehrzahl an Solarzellen 122 aufweist. Offenbart sind ferner ein Herstellungsverfahren für eine Trägerrakete 1 und ein Transportverfahren für mindestens eine Last mit einer Trägerrakete 1.

### Bezugszeichen

- 1: Trägerrakete

- 10: Oberstufe
- 11: Nutzlastverkleidung
- 12, 12': Photovoltaikmodul
- 13: Vertiefung
- 14: äußere Oberfläche der Trägerrakete
- 15: Isolierung
- 16: äußere Oberfläche eines Treibstofftanks oder einer Übergangsstruktur
- 17: Anschluss
- 18a, 18b: Verbindungsleitung

- 20: Antriebsstufe
- 21: Triebwerk
- 22: Hilfsraketen ("Booster")

- 121: Solarfeld
- 122: Solarzelle
- 123: Kabelbaum
- 124a, 124b: Anschlussleitung

## Patentansprüche

1. Trägerrakete (1) zum Transport mindestens einer Last in eine Erdumlaufbahn, wobei die Trägerrakete an ihrer äußeren Oberfläche (14) eine Mehrzahl an Solarzellen (122) aufweist, wobei die Mehrzahl in mindestens ein Photovoltaikmodul (12) integriert ist, das eine Mehrzahl an in einem Kabelbaum (123) gebündelten Anschlussleitungen umfasst und in eine Vertiefung (13) in einer Isolierung (15) eingesetzt ist, und wobei die Mehrzahl an Solarzellen (122)
- mindestens eine Solarzelle umfasst, die dazu eingerichtet ist, lösbar an eine elektrische und/oder eine elektronische Komponente einer transportierten bzw. zu transportierenden Last angeschlossen zu werden, wobei der Kabelbaum (123) mittels eines Anschlusses (17) in der Vertiefung (13) mit der elektrischen und/oder elektronischen Komponente zu verbinden ist; und/oder
- mindestens einen Akkumulator und mindestens eine Solarzelle umfasst, wobei die Solarzelle dazu eingerichtet ist, lösbar oder dauerhaft an den mindestens einen Akkumulator angeschlossen zu werden, der lösbar mit einer elektrischen und/oder einer elektronischen Komponente der transportierten bzw. zu transportierenden Last zu verbinden ist, wobei der Kabelbaum (123) mittels eines Anschlusses (17) in der Vertiefung (13) mit dem Akkumulator verbunden oder zu verbinden ist.

2. Trägerrakete gemäß Anspruch 1, die als eine Mehrstufenrakete ausgebildet ist, wobei die Mehrzahl an Solarzellen an einer Oberstufe (10) der Mehrstufenrakete angeordnet ist.

3. Trägerrakete gemäß einem der vorhergehenden Ansprüche, wobei die Mehrzahl an Solarzellen (122) zusammen eine Einstrahlungsoberfläche für Sonnenlicht von mindestens 10m², bevorzugter mindestens 20m² oder sogar mindestens 50m² umfassen.

4. Trägerrakete gemäß einem der vorhergehenden Ansprüche, wobei die Mehrzahl an Solarzellen mindestens eine als biegsame Solarfolie ausgebildete und/oder mindestens eine in eine biegsame Solarfolie integrierte und/oder mindestens eine organische Solarzelle umfasst.

5. Transportverfahren für mindestens eine Last, wobei die Last mit einer Trägerrakete (1) nach einem der Ansprüche 1 bis 4 von der Erdoberfläche in eine Erdumlaufbahn transportiert wird.

6. Transportverfahren nach Anspruch 5, das umfasst:
- ein Anschließen mindestens einer elektrischen und/oder mindestens einer elektronischen Komponente der Last an mindestens einen elektrischen Anschluss der Mehrzahl an Solarzellen (122) bzw. einen mit der Mehrzahl an Solarzellen verbundenen Akkumulator und
- ein Versorgen der mindestens einen elektrischen bzw. elektronischen Komponente während des Transports mit aus der Mehrzahl an Solarzellen durch Sonneneinstrahlung gewonnener Energie.

## Claims

1. A launch vehicle (1) to transport at least one payload into an earth orbit, wherein the launch vehicle has a plurality of solar cells (122) on its outer surface (14), wherein the plurality is integrated into at least one photovoltaic module (12) which comprises a plurality of connection lines bundled in a cable harness (123) and is inserted into a depression (13) in an insulation (15), and wherein the plurality of solar cells (122) comprises
- at least one solar cell which is configured to be detachably connected to an electrical and/or an electronic component of a transported payload or payload to be transported, wherein the cable harness (123) is to be connected to the electrical and/or electronic component by means of a connection (17) in the depression (13); and/or
- at least one accumulator and at least one solar cell, wherein the solar cell is configured to be detachably or permanently connected to the at least one accumulator which is to be detachably connected to an electrical and/or an electronic component of the transported payload or payload to be transported, wherein the cable harness (123) is connected or to be connected to the accumulator by means of a connection (17) in the depression (13).

2. The launch vehicle according to claim 1, which is designed as a multistage rocket, wherein the plurality of solar cells is arranged on an upper stage (10) of the multistage rocket.

3. The launch vehicle according to any one of the preceding claims, wherein the plurality of solar cells (122) together comprise an irradiation surface for sunlight of at least 10 m², more preferably at least 20 m² or even at least 50 m².

4. The launch vehicle according to any one of the preceding claims, wherein the plurality of the solar cells comprises at least one solar cell that is configured as a pliable solar film, and/or at least one solar cell integrated into the pliable solar film, and/or at least one organic solar cell.

5. A transport method for at least one payload, wherein the payload is transported from a surface of the earth into an earth orbit using a launch vehicle (1) according to any one of claims 1 to 4.

6. The transport method according to claim 5, comprising:
- connecting at least one electrical and/or at least one electronic component of the payload to at least one electrical connection of the plurality of solar cells (122) or an accumulator connected to the plurality of solar cells, and
- supplying at least one electrical or electronic component during transport with energy obtained from the plurality of solar cells by means of solar radiation.

## Revendications

1. Lanceur (1) pour le transport d'au moins une charge dans une orbite terrestre, sachant que le lanceur comporte sur sa surface extérieure (14) une pluralité de cellules solaires (122), sachant que la pluralité est intégrée dans au moins un module photovoltaïque (12), qui comprend une pluralité de câbles de connexion reliés en faisceau dans un faisceau de câbles (123) et est insérée dans une cavité (13) dans une isolation (15) et sachant que la pluralité de cellules solaires (122)
- comprend au moins une cellule solaire, qui est agencée pour être raccordée pouvant être séparée à un composant électrique et/ou électronique d'une charge transportée ou à transporter, sachant que le faisceau de câbles (123) est à relier au moyen d'une connexion (17) dans la cavité (13) au composant électrique et/ou électronique et/ou
- comprend au moins un accumulateur et au moins une cellule solaire, sachant que la cellule solaire est agencée pour être raccordée de façon séparable ou permanente à au moins un accumulateur, qui est à relier de façon séparable à un composant électrique et/ou électronique de la charge transportée ou à transporter, sachant que le faisceau de câbles (123) est relié ou à relier au moyen d'une connexion (17) dans la cavité (13) à l'accumulateur.

2. Lanceur selon la revendication 1, qui est constitué sous la forme d'une fusée à étages multiples, sachant que la pluralité de cellules solaires est disposée sur un étage supérieur (10) de la fusée à étages multiples.

3. Lanceur selon l'une quelconque des revendications précédentes, sachant que des cellules solaires (122) en grand nombre comprennent ensemble une surface d'irradiation pour la lumière solaire d'au moins 10 m², de préférence d'au moins 20 m² ou même d'au moins 50 m2.

4. Lanceur selon l'une quelconque des revendications précédentes, sachant que la pluralité de cellules solaires comprend au moins une cellule solaire constituée sous la forme d'un film solaire souple et/ou au moins une cellule solaire intégrée dans un film solaire souple et/ou au moins une cellule solaire organique.

5. Procédé de transport pour au moins une charge, sachant que la charge est transportée de la surface terrestre dans une orbite terrestre avec un lanceur (1) selon l'une quelconque des revendications 1 à 4.

6. Procédé de transport selon la revendication 5, qui comprend :
- un raccordement au moins d'un composant électrique et/ou au moins électronique de la charge à au moins une connexion électrique de la pluralité en cellules solaires (122) ou un accumulateur relié à la pluralité de cellules solaires, et
- une alimentation d'au moins un composant électrique ou électronique pendant le transport en énergie obtenue par rayonnement solaire à partir de la pluralité de cellules solaires.
